Europäisches Patentamt

European Patent Office

Office européen des brevets

(11) Veröffentlichungsnummer: **0 133 467**
B1

(12) **EUROPÄISCHE PATENTSCHRIFT**

(45) Veröffentlichungstag der Patentschrift: **19.09.90**

(21) Anmeldenummer: **84107482.6**

(22) Anmeldetag: **28.06.84**

(51) Int. Cl.⁵: **B 60 N 2/00, B 60 N 3/10**

(54) **Kühlbox für Kraftfahrzeuge oder ähnliche mobile Einrichtungen, insbesondere für Personenkraftwagen.**

(30) Priorität: **04.08.83 DE 3328120**

(43) Veröffentlichungstag der Anmeldung:
**27.02.85 Patentblatt 85/09**

(45) Bekanntmachung des Hinweises auf die
Patenterteilung:
**19.09.90 Patentblatt 90/38**

(84) Benannte Vertragsstaaten:
**AT BE CH FR GB IT LI LU NL SE**

(56) Entgegenhaltungen:
**DE-A-3 004 716**
**GB-A-2 006 423**
**US-A-2 525 952**

(73) Patentinhaber: **AKTIEBOLAGET ELECTROLUX**
**Luxbacken 1**
**S-105 45 Stockholm (SE)**

(72) Erfinder: **Gaus, Ernst**
**Klammweg 72**
**D-7500 Karlsruhe 31 (DE)**

(74) Vertreter: **Geitz, Heinrich, Dr.-Ing.**
**Postfach 2708 Kaiserstrasse 156**
**D-7500 Karlsruhe 1 (DE)**

Courier Press, Leamington Spa, England.

**Beschreibung**

Die Erfindung betrifft eine Kühlbox für Kraftfahrzeuge oder ähnliche mobile Einrichtungen, die ein eigenes Bordnetz besitzen, insbesondere für Personenkraftwagen, die zwischen zwei im Abstand voneinander angeordneten Fahrzeugsitzen aufgenommen ist und bei der ein Kältekompressor eines einen Kühlraum, der mit wenigstens einer abschließbaren Beschickungsund Entnahmeöffnung versehen ist, versorgenden Kälteaggregates mittels eines an das Bordnetz des Fahrzeugs anlegbaren Elektromotors angetrieben wird (DE—A—3 004 716).

Aus der GB—A—2 006 423 ist ein klimatisierter Personenkraftwagen bekannt, bei dem sich ein Klimagerät zwischen zwei in Abstand voneinander angeordneten Fahrzeugsitzen befindet. Dieses Klimagerät besitzt ein rückseitig über die Rückenlehnen der Fahrzeugsitze vorstehendes Kühlfach, das für die Aufnahme beispielsweise von Getränken bestimmt ist. Zum Zwecke der Kühlung der im Kühlfach aufgenommenen Getränke kann ein gesteuerter Kühlluftstrom durch das Kühlfach hindurchgeführt und dann in den Fahrgastraum abgeleitet werden.

Bei dem Kühlfach der in der GB—A—2 006 423 beschriebenen Anordnung handelt es sich um einen mit einer Klimaanlage kombinierten Kleinbehälter, der nur von den rückwärtigen Fahrzeugsitzen aus zugänglich ist und ein äußerst bescheidenes Fassungsvermögen besitzt.

Es sind aber auch schon größere Kühlboxen bekannt, die beispielsweise in modernen Reisebussen Verwendung finden, um für die Fahrgäste Getränke oder sonstiges Kühlgut bereitzuhalten. Dabei handelt es sich um truhenartige Geräte, die an geeigneter Stelle im Fahrgastraum derartiger Fahrzeuge aufgestellt werden und deren Kühlraum eine oberseitige, mittels einer Klappe oder eines Deckels verschließbare Beschickungs- und Entnahmeöffnung aufweist. Das Kälteaggregat ist bei derartigen Geräten mit einem im Kühlmittelkreislauf dem Kompressor nachgeschalteten Kondensator unter oder neben dem Kühlraum angeordnet, während der im Kühlraum aufgenommene Verdampfer den Kondensator über eine Entspannungseinrichtung nachgeschaltet ist.

Während das eingangs erläuterte Kühlfach einer Klimaanlage angesichts seines nur sehr begrenzten Volumens und wegen der umständlichen Zugriffsmöglichkeit lediglich von den Rücksitzen aus unbefriedigend erscheint, sind Kühlboxen in Form truhenartiger Geräte angesichts ihres Platzbedarfs bei Fahrzeugen mit begrenzten Fahrgasträumen nicht einsetzbar, weil sie etwa die einem Fahrzeugsitz entsprechende Aufstellfläche benötigen.

Demgemäß soll durch die Erfindung eine für beengte Einbauverhältnisse, wie sie in Fahrzeugen der genannten Art regelmäßig anzutreffen sind, geeignete un bestimmte Kühlbox geschaffen werden, die einen gut zugänglichen und ausreichend großen Kühlraum besitzt, jedoch den Fahrgastraum nicht wesentlich beeinträchtigt.

Gelöst ist diese Aufgabe dadurch, daß bei der Kühlbox nach dem Oberbegriff des Patentanspruchs 1 eine Konsole mit dem Kälteaggregat sich zwischen den Sitzpolstern und der Kühlraum zwischen den Rückenpolstern befindet und daß eine die Beschickungs- und Entnahmeöffnung des Kühlraums abschließende Abdeckung in eine horizontale Öffnungsstellung betätigbar ist und in dieser eine sich an die Beschickungs- und Entnahmeöffnung anschließende Abstellfläche bildet.

Durch die Erfindung ist somit eine Kühlbox geschaffen worden, die den bei Fahrzeugen der hier in Rede stehenden Art zwischen benachbarten Sitzen vorhandenen Freiraum ausnutzt und daher trotz vergleichsweise großer Bemessung des Kühlraums den Fahrgastraum im übrigen nicht beeinträchtigt. Darüber hinaus ist angesichts der Verschwenkbarkeit der die Beschickungs- und Entnahmeöffnung verschließenden Abdeckung in eine horizontale Öffnungsstellung eine bequeme Handhabung gewährleistet.

Zweckmäßige Ausgestaltungen der Erfindung sind in den Unteransprüchen angegeben.

So kann sich gemäß Patentanspruch 2 der Kühlraum auch nach rückwärts über die Dicke der Rückenpolster hinaus bis an die Sitzpolster rückwärtiger Fahrzeugsitze erstrecken, gemäß Anspruch 3 aber auch über die Tiefe der rückwärtigen Fahrzeugsitze reichen.

Gemäß Patentanspruch 4 kann die Beschickungs- und Entnahmeöffnung dabei in einer sich in der Einbaulage des Gerätes zwischen den Rückenpolstern der Fahrzeugsitze erstreckenden vorderen Stirnwand des Kühlraums angeordnet und die Abdeckung als im Bereich der Unterkante dieser Öffnung angelenkte, in eine horizontale Öffnungsstellung verschwenkbare Klappe ausgebildet sein, so daß letztere in der Öffnungslage eine tablettartige Stellfläche für dem Kühlraum entnommenes Gut bildet.

Nach der Ausgestaltung gemäß Patentanspruch 5 kann auch eine den Kühlraum nach rückwärts abschließende Stirnwand mit einer Beschickungs- und Entnahmeöffnung versehen sowie letztere durch eine Abdeckung abgeschlossen sein, die ebenfalls als im Bereich der Unterkante der Öffnung angelenkte und in eine horizontale Öffnungsstellung verschwenkbare Klappe ausgebildet ist. Dies ermöglicht einen bequemen Zugriff zum Kühlraum gleichermaßen von den vorderen und rückwärtigen Fahrzeugsitzen aus.

Eine andere zweckmäßige Ausgestaltung der Erfindung besteht nach Patentanspruch 6 darin, daß der Kondensator in an sich bekannter Weise zwangsbelüftet ist, wobei gemäß Patentanspruch 7 wenigstens ein Teilstrom der zur Zwangsbelüftung des Kondensators zugeführten Kühlluft unmittelbar von außen zugeführte Frischluft sein kann.

Nach dem Ausgestaltungsmerkmal des Patentanspruchs 8 erfolgt die Zwangsbelüftung des Kondensators mittels eines in Abhängigkeit von der Steuerung des Antriebsmotors des Kältekompressors gesteuerten Gebläses und nach Patentanspruch 9 können für eine Belüftung des Kondensators aus dem Fahrgastraum heraus im Bereich der die Standkonsole vorderseitig abschließenden Stirnwand ein Zuluftgitter und entsprechend im Bereich der die Standkonsole nach rückwärts abschließenden Stirnwand ein Abluftgitter angeordnet sein.

Eine Ausführungsform der Erfindung soll nachstehend anhand der beigefügten Zeichnung erläutert werden. In schematischen Ansichten zeigen:

Fig. 1 eine perspektivische Gesamtansicht einer teilweise aufgebrochen dargestellten Kühlbox nach der Erfindung, die für den Einbau im Zwischenraum zwischen den Frontsitzen eines Personenkraftwagens bestimmt ist,

Fig. 2 die Kühlbox in einer teilweise geschnitten dargestellten Vorderansicht und

Fig. 3 einen Vertikalschnitt gemäß der Schnittlinie III—III in Fig. 1 durch die Kühlbox.

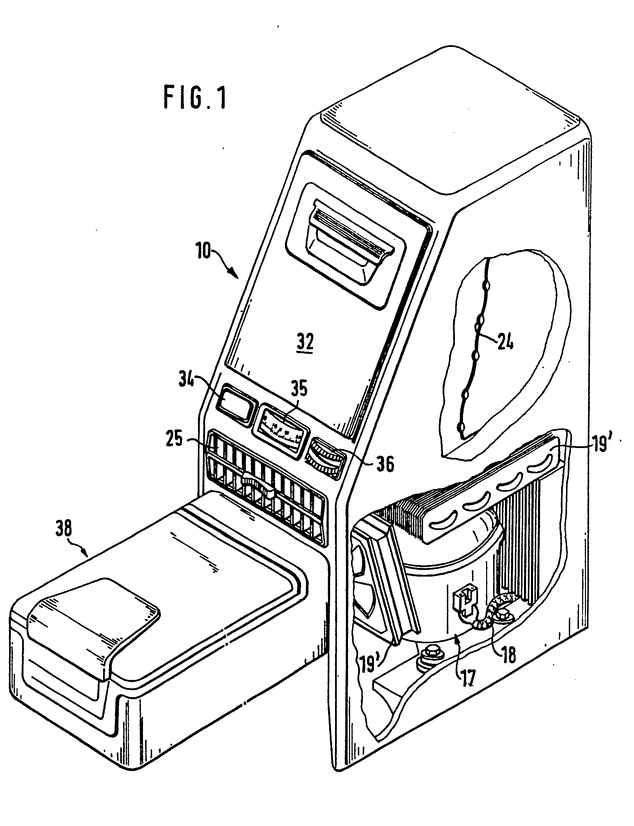

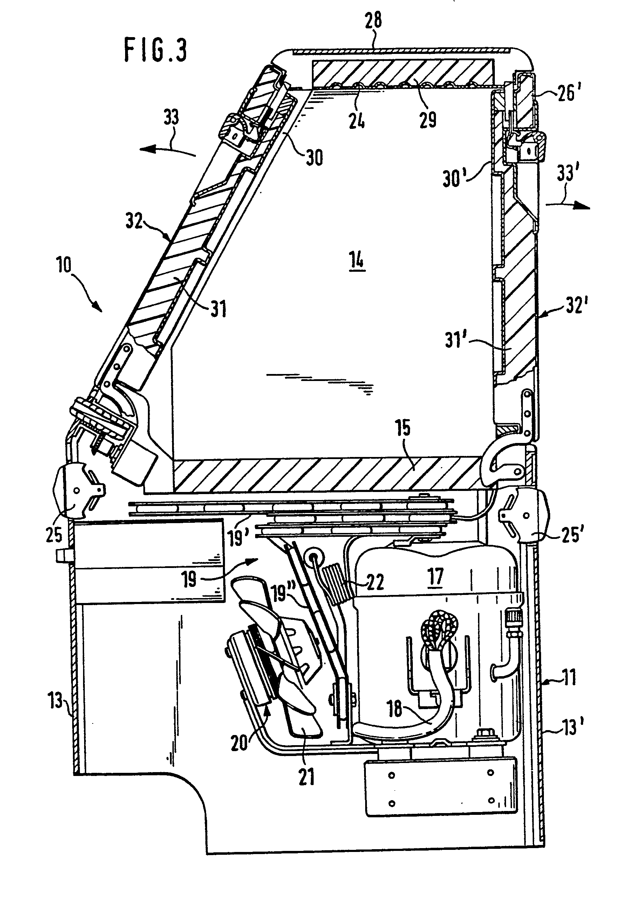

Die erfindungsgemäße Kühlbox 10 besitzt eine—in einer Draufsicht gesehen—etwa rechteckförmige und nach unten offene Konsole 11, die von jeweils parallel zueinander verlaufenden Seiten- und Stirnwänden 12, 12' und 13, 13' umschlossen und oberseitig von einer den Kühlraum 14, der auf der Konsole über dem Kälteaggregat liegend aufgenommen ist, nach unten abschließende Wand 15 begrenzt ist. Innerhalb der Konsole 11 ist auf Konsolträgern 16, die sich zwischen den Seitenwänden 12, 12' erstrecken, die Verdichterkapsel 17 des in der Konsole aufgenommenen Kälteaggregates angeordnet, in der in bekannter Weise ein Kältekompressor und ein letzteren antreibender Elektromotor aufgenommen sind, der über eine in den Fig. 1 und 3 ersichtliche elektrische Leitungsverbindung 18 an das Bordnetz eines mit einer derartigen Kühlbox ausgerüsteten Fahrzeugs in im einzelnen hier nicht interessierender Weise anlegbar ist.

Der im Kühlkreislauf dem Kältekompressor nachgeschaltete Kondensator 19 ist als bekannter Röhrenkondensator ausgebildet und besteht aus einem sich unter der die Konsole nach oben abschließenden unteren Wand 15 des Kühlraums 14 erstreckenden Wärmetauscher 19' aus in mehreren Lagen verlaufenden Wärmetauscherrohren und einem unterseitig in der Nähe der Verdichterkapsel 17 mit den letztere aufnehmenden Konsolträgern 16 verbundenen, sich schräg aufwärts innerhalb der Konsole erstreckenden Röhrentauscher 19''. Auf der von der Verdichterkapsel 17 entfernten Seite dieses Röhrentauschers 19'' ist ein Ventilator 20 mit einem in einer Parallelebene zu dem gennanten Röhrentauscher umlaufenden Lüfterrad 21 angeordnet, der eine Zwangsbelüftung des Kondensators vermittelt und der in Abhängigkeit von der Steuerung des Antriebsmotors für den Kältekompressor gesteuert wird. Dem im Kältekreislauf dem Kompressor nachgeschalteten Kondensator 19 ist seinerseits eine Entspannungseinrichtung 22 in Form einer spiralförmig angeordneten Kapillare nachgeschaltet, die ihrerseits mit dem im Kühlraum 14 der Kühlbox angeordneten Verdampfer 24 in Strömungsverbindung steht, von dem dann in bekannter Weise eine Rückführleitung für das Kühlmedium zu dem in der Verdichterkapsel 17 aufgenommenen Kältekompressor hinführt.

Im übrigen ist die Konsole 11 im Bereich ihrer vorder und rückseitigen Stirnwände 13, 13' unmittelbar unter dem Kühlraum 14 mit je einem Zu- und Abluftgitter 25, 25' versehen, die so angeordnet sind, daß über das Zuluftgitter 25 einströmende und über das Abluftgitter 25' abgeführte Kühlluft den unter der unteren Wand 15 des Kühlraums verlegten Wärmetauscher 19' bestreicht. Unterstützt wird die Strömung dieser Kühlluft, die dem Fahrgastraum eines mit einer derartigen Kühlbox ausgerüsteten Fahrzeugs entnommen wird, durch den Betrieb des die Zwangsbelüftung vermittelnden Ventilators 20, der seinerseits so angeordnet ist, daß ein von dem Lüfterrad 21 erzeugter Luftstrom unmittelbar den schräg geneigt innerhalb der Konsole angeordneten Röhrentauscher 19'' durchströmt. Diese Anordnung des Röhrentauschers 19'' und des Ventilators 20 mit in einer Parallellage zu dem Röhrentauscher verlaufenden Lüfterrad 21 ist unter dem Gesichtspunkt gewählt, daß bei bestimmten Fahrzeugen im Bereich zwischen den Frontsitzen ein Zuluftkanal zum Zuführen von Frischluft in den Fahrgastraum einmündet, so daß mittels des genannten Ventilators eine direkte Zwangsbelüftung der Wärmetauscher des Kondensators mit von außen zugeführter Frischluft erreicht wird.

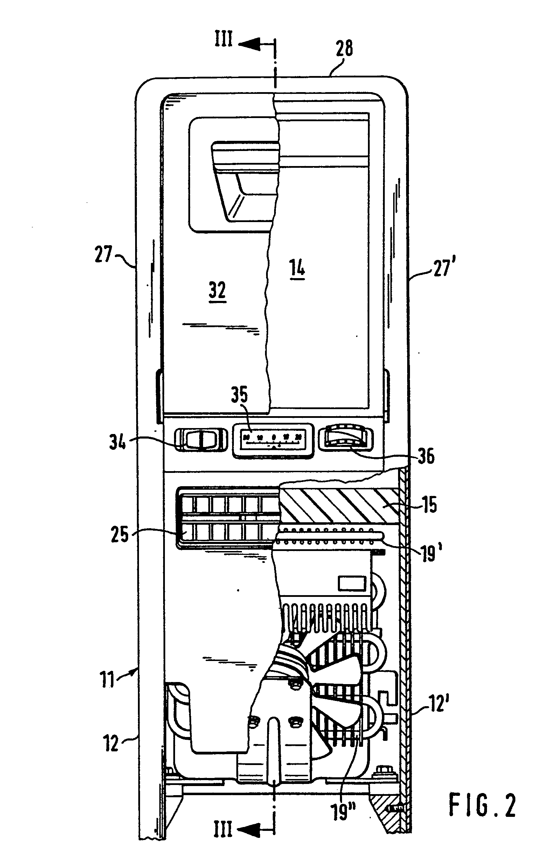

Angesichts des bestimmungsgemäßen Einbaus der Kühlbox 10 in den Zwischenraum zwischen den Frontsitzen eines Personenkraftwagens ist die aus Fig. 2 ersichtliche Breite der Kühlbox etwa gleich dem Zwischenraum zwischen derartigen Frontsitzen bemessen. Da sich in der Regel in der Längsachse des Fahrzeugs ein in den Fahrgastraum hochgewölbter Tunnel erstreckt, der beispielsweise bei Fahrzeugen mit Hinterradantrieb die Kardanwelle aufnimmt, sind die Seitenwände 12, 12' der Konsole über die zwischen letzteren angeordneten Konsolträger 16 heruntergezogen, während die die Konsole vorder- und rückseitig abschließenden Stirnwände 13, 13' der Tunnelform entsprechende Ausnehmungen aufweisen. Die Tiefe der Kühlbox und dem- entsprechend auch die Tiefe der Konsole ist so bemessen, daß die vordere Stirnwand 13 der Konsole etwa mit der Vorderkante der Rückenpolster der Frontsitze in einem mit einer derartigen Kühlbox ausgerüsteten Fahrzeug abschließt und die Konsole dann bis an die Vorderkante einer Rücksitzband oder der Sitzpolster rückwärtiger Sitze im Fahrzeug heranreicht. Der über der Konsole 11 aufgenommene Kühlraum 14 ist vorderseitig durch eine um etwa 25° nach oben und schräg rückwärts geneigte vordere Stirnwand 26 abgeschlossen, während die rückwärtige Stirnwand 26' und die beiden Seitenwände 27, 27' des Kühlraums fluchtend zu den entsprechenden seitlichen Wänden 12, 12' der Konsole verlaufen.

Diese Neigung der den Kühlraum 14 vorderseitig abschliessenden Stirnwand 26 entspricht etwa der normalen Neigung der Rückenpolster der die Kühlbox zwischen sich aufnehmenden Frontsitze eines Kraftfahrzeugs. Oberseitig ist der Kühlraum 14 durch eine Wand 28 abgeschlossen, die etwa in Hohe der Oberkante der Rückenpolster derartiger Fahrzeugsitze verläuft. Wie unsbesondere aus Fig. 3 ersichtlich, sind die den Kühlraum 14 umschließenden Wandungen in der bei Kühlraumen üblichen Weise mit einer innenseitigen Isolierstoffauskleidung 29 versehen. Schließlich ist der Kühlraum mit zwei Beschickungs- und Entnahmeöffnungen 30, 30' versehen, die in den einander gegenüberliegenden Stirnwänden 26, 26' angeordnet und mittels im Bereich der Unterkanten dieser Öffnungen angelenkter Klappen 32, 32', die ebenfalls mit innenseitigen Isolierstoffauskleidungen 31, 31' versehen sind, abschließbar sind. Aus den aus Fig. 3 ersichtlichen Schließlagen sind diese Klappen 32, 32' in Richtung der Drehpfeile 33, 33' um ihre Anlenkachsen in Horizontallagen verschwenkbar, wodurch die Beschickungs- und Entnahmeöffnungen freigegeben werden und die genannten Klappen in ihren Öffnungsstellungen nach vorn zwischen die Frontsitze bzw. nach hinten über die Sitzpolster rückwärtiger Sitze verschwenkte Abstellfächen bilden.

Zwischen der vorderseitigen Klappe 32 des Kühlraums 14 un dem Zuluftgitter 25 für die Zuluft zum Kühlen des in der Konsole 11 aufgenommenen Kondensators 19 des Kälteaggregates befinden sich in Nebeneinanderanordnung ein Ein- und Ausschalter 34, ein Anzeigeinstrument 35 für die jeweils im Kühlraum 14 herrschende Temperatur und ein Drehschalter 36 zum Einstellen eines Thermostaten zur Regelung der Kühlraumtemperatur. Im übrigen zeigt Fig. 1 ein hier nicht weiter interessierendes Ablagefach 38, das sich unter dem Zuluftgitter 25 von der Stirnwand 13 der Konsole 11 nach vorn erstreckt.

Es ist ersichtlich, daß die erfindungsgemäße Kühlbox 10 ohne störende Beanspruchung von Nutzraum in einem Personenkraftwagen installierbar ist und von den Frontsitzen eines derartigen Fahrzeugs aus unproblematisch bedienbar ist. Sie ermöglicht darüber hinaus gleichermaßen von den Frontsitzen und von rückwärtigen Sitzen eines Fahrzeugs aus den bequemen Zugriff zu den die Entnahme- und Beschickungsöffnungen abschließenden Klappen 32, 32' und gewährleistet so eine optimale Versorgung der Fahrzeuginsassen, indem diese ohne wesentliche Veränderung ihrer Sitzposition sich mit Kühlgut aus dem Kühlraum 14 versorgen können.

## Patentansprüche

1. Kühlbox (10) für Kraftfahrzeuge oder ähnliche mobile Einrichtungen, die ein eigenes Bordnetz besitzen, insbesondere für Personenkraftwagen, die zwischen zwei im Abstand nebeneinander angeordneten Fahrzeugsitzen aufgenommen ist und bei der ein Kältekompressor (17) eines einen Kühlraum (14), der mit wenigstens einer abschließbaren Beschickungs- und Entnahmeöffnung (30, 30') versehen ist, versorgenden Kälteaggregates (17) mittels eines an das Bordnetz anlegbaren Elektromotors (20) angetrieben wird, dadurch gekennzeichnet, daß eine Konsole (11) mit dem Kälteaggregat (17) sich zwischen den Sitzpolstern und der Kühlraum (14) zwischen den Rückenpolstern befindet und daß eine die Beschickungs- und Entnahmeöffnung (30, 30') des Kühlraums (14) abschließende Abdeckung (32, 32') in eine horizontale Öffnungsstellung betätigbar ist und in letzterer eine sich an die Beschickungs- und Entnahmeöffnung anschließende Abstellfläche bildet.

2. Kühlbox nach Anspruch 1, dadurch gekennzeichnet, daß sich der Kühlraum (14) nach rückwärts über die Dicke der Rückenpolster der Fahrzeugsitze hinaus bis an die Sitzpolster von rückwärtigen Fahrzeugsitzen erstreckt.

3. Kühlbox nach Anspruch 1, dadurch gekennzeichnet, daß sich der Kühlraum (14) über die Tiefe rückwärtiger Fahrzeugsitze hinauserstreckt.

4. Kühlbox nach Anspruch 1 oder 2, dadurch gekennzeichnet, daß die Beschickungs- oder Entnahmeöffnung (30) in einer sich in der Einbaulage des Gerätes zwischen den Rückenpolstern der Fahrzeugsitze erstreckenden vorderen Stirnwand (26) des Kühlraums (14) angeordnet ist und daß die Abdeckung als im Bereich der Unterkante dieser Öffnung angelenkte, in eine horizontale Öffnungsstellung verschwenkbare Klappe (32) ausgebildet ist.

5. Kühlbox nach Anspruch 1, 2 oder 4, gekennzeichnet durch eine in einer den Kühlraum (14) nach rückwärts abschließenden Stirnwand (26') angeordnete Beschickungs- und Entnahmeöffnung (30') sowie durch eine Abdeckung für letztere, die als im Bereich der Unterkante dieser Öffnung angelenkte und in eine horizontale Öffnungsstellung verschwenkbare Klappe (32') ausgebildet ist.

6. Kühlbox nach einem der Ansprüche 1 bis 5, dadurch gekennzeichnet, daß der Kondensator (19) des Kälteaggregates in an sich bekannte Weise zwangsbelüftet ist.

7. Kühlbox nach einem der Ansprüche 1 bis 6, dadurch gekennzeichnet, daß wenigstens ein Teilstrom der zur Zwangsbelüftung des Kondensators (19) zugeführten Kühlluft unmittelbar von außen zugeführte Frischluft ist.

8. Kühlbox nach Anspruch 6 oder 7, dadurch gekennzeichnet, daß die Zwangsbelüftung des Kondensators (19) mittels eines in Abhängigkeit von der Steuerung des Antriebsmotors des Kältekompressors gesteuerten Gebläses (20) erfolgt.

9. Kühlbox nach einem der Ansprüche 6 bis 8, dadurch gekennzeichnet, daß im Bereich der die Standkonsole vorder- und/oder rückseitig abschließenden Stirnwände (13, 13') Zu- und/oder Abluftgitter (25, 25') für die Kühlluft des Kondensators (19) angeordnet ist.

## Revendications

1. Caisson de réfrigération (10) pour véhicules automobiles ou dispositifs mobiles analogues possédant un réseau d'alimentation électrique propre, notamment pour véhicules automobiles de transport de particuliers, ce caisson étant monté entre deux sièges du véhicule espacés l'un de l'autre et comprenant une unité de réfrigération (17) incluant un compresseur de réfrigération (17) entraîné par un moteur électrique (20) pouvant être branché sur le réseau d'alimentation électrique du vèhicule, ladite unité agissant sur un espace de réfrigération (14) pourvu d'au moins une ouverture d'introduction et de prélèvement pouvant être fermée, entraîné par un moteur électrique (20) pouvant être branché sur le réseau d'alimentation électrique de véhicule, caractérisé en ce qu'une console (11) comprenant l'unité de réfrigération (17) se trouve entre les sièges et l'espace de réfrigération (14) entre les dossiers et qu'un volet (32, 32') fermant l'ouverture d'introduction et de prélèvement (32, 32') de l'espace de réfrigération puet être actionné dans une position horizontale d'ouverture dans laquelle elle forme une surface de pose reliée à l'ouverture d'introduction et de prélèvement.

2. Caisson de réfrigération selon la revendication 1, caractérisé en ce que l'espace de réfrigération (14) s'étend vers l'arrière, au-delà de l'épaisseur du dossier du siège du véhicule, jusqu'à la banquette du siège arrière.

3. Caisson de réfrigération selon la revendication 1, caractérisé en ce que l'espace de réfrigération (14) s'étend au-dessus de la profondeur des sièges arrières du véhicule.

4. Caisson de réfrigération selon les revendications 1 ou 2, caractérisé en ce que l'ouverture d'introduction ou de prélèvement (30) est disposée dans une paroi frontale avant (26) de l'espace de réfrigération (14), s'étendant entre les dossiers des sièges du vèhicule dans la position de montage de l'appareil et que son obturation est réalisée sous forme d'un volet (32) articulé dans la région du bord inférieur de ladite ouverture, pouvant être basculé dans une position d'ouverture horizontale.

5. Caisson de réfrigération selon les revendications 1, 2 ou 4 caractérisé en ce qu'une ouverture d'introduction et de prélèvement (30') est disposée dans une paroi frontale (26') délimitant l'espace de réfrigération (14) vers l'arrière et que sa fermeture est agencée sous forme d'un volet (32') articulé dans la région du bord inférieur de ladite ouverture, pouvant être basculé dans une position d'ouverture horizontale.

6. Caisson de réfrigération selon l'une des revendications 1 à 5, caractérisé en ce que le condenseur (19) de l'unité de réfrigération est soumis à une ventilation forcée, d'une manière connue en soi.

7. Caisson de réfrigération selon l'une des revendications 1 à 6 caractérisé en ce qu'au moins une partie du flux d'air de refroidissement amené pour la ventilation forcée du condenseur (19) est de l'air frais amené directement de l'extérieur.

8. Caisson de réfrigération selon l'une des revendications 6 ou 7, caractérisé en ce que la ventilation forcée du condenseur (19) est réalisée au moyen d'une soufflerie (20) commandée sous la dépendance de la commande du moteur d'entraînement du compresseur de réfrigération.

9. Caisson de réfrigération selon l'une des revendications 6 à 8, caractérisé en ce que des grilles d'amenée et d'évacuation (25, 25') pour l'air de refroidissement du condenseur sont disposées dans la région des parois frontales (13, 13') délimitant la console vers l'avant et/ou vers l'arrière.

**Claims**

1. Refrigerator (10) for motor vehicles or similar mobile equipments which possess their own on-board electrical supply, in particular for passenger vehicles, which refrigerator is received between two vehicle seats arranged one beside the other and in which a refrigerator compressor (17) of a refrigerating unit (17), which supplies a refrigerating space (14), which is provided with at least one closable loading and withdrawal opening (30, 30'), is driven by means of an electrical motor (20) switchable to the on-board electrical supply, characterised thereby, that a console (11) with the refrigerating unit (17) is situated between the seat cushions and the refrigerating space (14) is situated between the back cushions and that a cover (32, 32'), which closes off the loading and withdrawal opening (30, 30') of the refrigerating space (14), is actuable into an horizontal open setting and in the latter forms a shelf surface adjoining the loading and withdrawal opening.

2. Refrigerator according to claim 1, characterised thereby, that the refrigerating space (14) extends rearwardly beyond the thickness of the back cushions of the vehicle seats to the seat cushions of rear vehicle seats.

3. Refrigerator according to claim 1, characterised thereby, that the refrigerating space (14) extends beyond the depth of rear vehicle seats.

4. Refrigerator according to claim 1 or 2, charaterised thereby, that the loading and withdrawal opening (30) is arranged in a front end wall (26), which in the installed position of the appliance extends between the back cushions of the vehicle seats, of the refrigerating space (14) and that the cover is constructed as flap (32), which is hinged in the region of the lower edge of this opening and pivotable into an horizontal open setting.

5. Refrigerator according to claim 1, 2 or 4, characterised by a loading and withdrawal opening (30') arranged in an end wall (26') closing the refrigerating space (14) off rearwardly as well as by a cover for that opening, which cover is constructed as flap (32'), which is hinged in the region of the lower edge of this opening and pivotable into an horizontal open setting.

6. Refrigerator according to one of the claims 1 to 5, characterised thereby, that the condenser (19) of the refrigerating unit is pressure-cooled in an in itself known manner.

7. Refrigerator according to one of the claims 1 to 6, characterised thereby, that at least a partial current of the cooling air fed to the pressure-cooling of the condenser (19) is fresh air fed directly from the outside.

8. Refrigerator according to claim 6 or 7, characterised thereby, that the pressure-cooling of the condenser (19) takes place by means of a blower (20) controlled in dependence on the control of the driving motor of the refrigerating compressor.

9. Refrigerator according to one of the claims 6 to 8, characterised thereby, that air inflow and/or outflow gratings (25, 25') for the cooling air of the condenser (19) are arranged in the region of the end walls (13, 13') closing the stand console off forwardly and/or rearwardly.

FIG.1

10

32

34

35

25

38

24

19'

36

19'

17

18

FIG. 2

FIG.3